(19) **Europäisches Patentamt / European Patent Office / Office européen des brevets**

(11) **EP 1 327 159 B1**

(12) **FASCICULE DE BREVET EUROPEEN**

(45) Date de publication et mention
de la délivrance du brevet:
**27.08.2008 Bulletin 2008/35**

(21) Numéro de dépôt: **01978554.2**

(22) Date de dépôt: **17.10.2001**

(51) Int Cl.:
*G01S 5/14* (2006.01)     *G01S 1/04* (2006.01)

(86) Numéro de dépôt international:
**PCT/FR2001/003216**

(87) Numéro de publication internationale:
**WO 2002/033437 (25.04.2002 Gazette 2002/17)**

(54) **SYSTEME DE SUIVI D'UN MOBILE**

VORRICHTUNG ZUR VERFOLGUNG EINER MOBILEINHEIT

SYSTEM FOR TRACKING A MOVING OBJECT

(84) Etats contractants désignés:
**DE FR GB IT SE**

(30) Priorité: **20.10.2000 FR 0013484**

(43) Date de publication de la demande:
**16.07.2003 Bulletin 2003/29**

(73) Titulaire: **Thales**
**75008 Paris (FR)**

(72) Inventeurs:
• **RENARD, Alain,**
**Thales Intellectual Property**
**F-94117 Arcueil Cedex (FR)**

• **CLAVEL, Yannick,**
**Thales Intellectual Property**
**F-94117 Arcueil Cedex (FR)**

(74) Mandataire: **Beylot, Jacques**
**Marks & Clerk France**
**31-33 Avenue Aristide Briand**
**94117 Arcueil Cedex (FR)**

(56) Documents cités:
**FR-A- 2 759 783**      **US-A- 5 729 235**

EP 1 327 159 B1

**Description**

La présente invention concerne un système de suivi d'un mobile à partir d'une station de surveillance pouvant être également mobile, au moyen des signaux émis par des satellites d'un système de positionnement et relayés par un transpondeur qui est monté sur le mobile et qui effectue, au passage, un changement de fréquence sur les signaux provenant des satellites du système de positionnement.

Les satellites d'un système de positionnement par satellites tels que le système américain GPS ou le système russe GLONASS, émettent des signaux qui résultent de la modulation d'une porteuse par un code d'étalement constitué d'une suite binaire pseudo-aléatoire elle-même modulée par des données relatives aux positions des satellites, à leurs vecteurs vitesse et à l'horloge système synchronisant porteuse, code d'étalement et cadence de transmission des données. Les retards de code d'étalement et les décalages Doppler affectant la fréquence porteuse de ces signaux, en réception, renseignent sur les distances relatives ou pseudo-distances et les vitesses relatives ou pseudo-vitesses de déplacement entre le récepteur et les satellites et permettent, comme cela est bien connu, de déterminer la position du récepteur et les composantes de son vecteur vitesse par des opérations de triangulation.

Il existe un certain nombre de situations où les informations contenues dans les signaux d'un système de positionnement par satellites ne sont pas traitées dans le mobile qui les reçoit mais ailleurs, dans une ou plusieurs stations de surveillance embarquées sur un autre mobile ou placées en une position fixe sur le sol. Ce peut être le cas d'un missile qui reçoit ses ordres de guidage d'une station embarquée sur un aéronef ou placée au sol en une position fixe ou mobile, ou le cas d'un projectile dont on veut connaître la trajectoire depuis un centre de tir.

Dans ces situations, le mobile dont la position est surveillée au moyen d'un système de positionnement par satellites retransmet à sa ou ses stations de surveillance, les informations sur sa position et son vecteur vitesse données par le système de positionnement par satellites, soit sous la forme brute des signaux reçus des satellites du système de positionnement, soit sous une forme explicite, après des traitements plus ou moins aboutis de ces signaux.

Lorsque les informations contenues dans les signaux des satellites du système de positionnement, reçus par le mobile sous surveillance, ne sont pas directement exploitées à bord du mobile, on préfère retransmettre ces signaux sous leur forme brute aux stations de surveillance pour limiter la puissance de calcul embarquée, cela pour des questions de charge utile et de coût, surtout, lorsque le mobile n'est pas réutilisable, comme c'est le cas d'un missile ou d'un projectile d'artillerie.

Pour retransmettre à une station de surveillance, les signaux qu'il reçoit de la part des satellites d'un système de positionnement, un mobile ne peut se contenter simplement d'amplifier ces signaux et de les réémettre car une station de surveillance ne pourrait pas les distinguer facilement, de ceux qu'elle reçoit directement des satellites du système de positionnement. Il est donc habituel, lors de la retransmission de ces signaux, de changer leurs fréquences pour les décaler en fréquence par rapport aux signaux des satellites du système de positionnement.

On connaît dans la technique, divers équipements transpondeurs réalisant cette fonction de réémission, avec changement de fréquence, en direction de stations de surveillance, des signaux d'un système de positionnement par satellites captés à bord d'un mobile. Ils sont souvent désignés sous la dénomination anglo-saxonne de "GPS translator". Certains de ces équipements transpondeurs réémettent les signaux reçus des satellites du système de positionnement après une simple opération de transposition au sein de la bande de fréquence utilisée par les satellites du système de positionnement de manière à ce qu'ils soient décalés en fréquence par rapport à ceux des satellites mais qu'ils puissent cependant être captés et traités par un récepteur classique de système de positionnement par satellites, d'autres réémettent les signaux reçus des satellites du système de positionnement après les avoir transposés en bande vidéo et utilisés pour moduler une porteuse auxiliaire de transmission.

Dans un récepteur d'un système de positionnement par satellites, il est habituel d'assimiler le retard en réception d'un code binaire pseudo-aléatoire d'étalement, au retard affectant une boucle locale de récupération de code de type DLL (de l'anglo-saxon "Delay Locked Loop") et le décalage Doppler affectant en réception la porteuse d'un signal émis par un satellite, au décalage de phase et de fréquence affectant une boucle locale de récupération de porteuse de type PLL (de l'anglo-saxon "Phase Locked Loop").

Dans le cas d'un récepteur d'un système de positionnement par satellites traitant directement les signaux des satellites, les retards des codes d'étalement et les décalages Doppler des porteuses affectant en réception les signaux des satellites permettent de calculer une position et une vitesse dans les trois dimensions (latitude, longitude, altitude) et également d'acquérir la référence de temps absolu du système de positionnement.

Dans le cas d'un récepteur de système de positionnement par satellites recevant indirectement les signaux des satellites après qu'ils aient été relayés par un transpondeur porté par un mobile, les retards des codes d'étalement et les décalages Doppler des porteuses des signaux des satellites sont affectés par le relayage.

Les retards affectant les codes d'étalement contenus dans le signal provenant du transpondeur ne correspondent plus aux temps mis par les signaux pour parcourir les distances séparant le récepteur des satellites, mais aux temps mis par les signaux pour parcourir les trajets allant de leurs satellites d'origine au porteur du transpondeur et du porteur du transpondeur à la station de surveillance où se situe le récepteur. Comme la deuxième partie des trajets allant du porteur du transpondeur à la station de surveillance où se situe le récepteur est la même pour les signaux de tous les satellites, elle se traduit par un retard identique pour tous ces signaux qui constitue une erreur de mode commun au même titre que le décalage de l'horloge de réception. Ce retard peut être éliminé par le traitement habituel effectué sur les pseudo-distances pour tenir compte du décalage de l'horloge de réception de sorte qu'en final, les retards sur les codes d'étalement provenant du signal d'un transpondeur permettent de localiser le porteur du transpondeur comme on aurait pu le faire, à bord du transpondeur, à partir des signaux des satellites du système de positionnement reçus directement. Cette solution a cependant pour inconvénient, de ne plus permettre l'acquisition en réception de la référence de temps absolu du système de positionnement.

Les décalages en fréquence des porteuses contenues dans le signal d'un transpondeur résultent, pour le signal de chaque satellite, de la combinaison:

- de l'erreur en fréquence affectant la porteuse initiale émise par le satellite,
- d'un premier effet Doppler qui est dû à la vitesse du déplacement relatif entre le satellite émetteur et le porteur du transpondeur et qui affecte la porteuse initiale émise par le satellite, à sa réception au niveau du transpondeur,
- du décalage de la référence d'horloge utilisée en réception,
- de l'erreur en fréquence commise par le transpondeur lors du changement de fréquence, et
- d'un deuxième effet Doppler qui est dû au déplacement relatif du porteur du transpondeur par rapport au récepteur et qui affecte la porteuse initiale du signal après sa transposition par le transpondeur, à sa réception au niveau du récepteur.

Les trois premières causes à l'origine du décalage en fréquence constaté sont classiques et se retrouvent dans les signaux captés directement des satellites. Par contre les deux autres, l'erreur en fréquence commise par le transpondeur lors du décalage en fréquence et le deuxième effet Doppler affectant la porteuse du signal après transposition sont nouvelles et doivent être prises en compte.

Il est très difficile d'agir au niveau du transpondeur sur l'erreur qu'il commet lors du changement de fréquence, la seule possibilité d'action étant d'améliorer la précision de son horloge et ayant rapidement une limite. Aussi l'on cherche à corriger cette erreur en réception. Pour ce faire, on doit en avoir une estimation en réception. Une manière d'obtenir cette estimation consiste à faire émettre par le transpondeur, un pilote de transposition qui est verrouillé en phase avec son horloge. Des systèmes employant ce type de méthode sont divulgués dans les documents FR 2759783A1 et US 5729235A. Ce pilote de transposition permet, en réception, de récupérer la phase et la fréquence de l'horloge du transpondeur et donc de connaître avec exactitude la transposition de fréquence réellement effectuée par le transpondeur sur la porteuse des signaux des satellites. On peut ainsi corriger l'écart de fréquence mesuré par le signal d'erreur de la boucle de récupération de porteuse avant de l'utiliser pour extraire des informations sur la vitesse du porteur du transpondeur.

Le deuxième effet Doppler affectant les porteuses après leurs transpositions en fréquence par le transpondeur en raison du mouvement relatif entre le porteur du transpondeur et le récepteur, est commun à tous les signaux des satellites et se traduit par une erreur de mode commun sur la mesure de vitesse du porteur du transpondeur qui peut être éliminée par traitement mathématique en faisant intervenir un satellite supplémentaire.

Cependant, l'écart de fréquence constaté en réception, sur la boucle de récupération de porteuse reste, même après avoir été corrigé de sa composante due à l'imprécision du changement de fréquence du transpondeur, biaisé par le deuxième effet Doppler. Ce biais est plus faible dans le cas des transpondeurs effectuant une transposition en bande vidéo des signaux reçus avant de les réémettre par modulation d'une porteuse de transmission mais il subsiste et entraîne une incohérence entre les pseudo-distances tirées des retards de code et les pseudo-vitesses tirées des écarts de fréquence porteuse. Cette incohérence fait que l'intégral des pseudo-vitesses ne correspond pas aux pseudo-distances mesurées alors que cette propriété est recherchée car elle permet de réaliser, de manière simple des tests de bon fonctionnement d'un récepteur d'un système de navigation par satellites.

La présente invention a pour but de résoudre ce problème et plus généralement, d'améliorer la précision des informations de position et de vitesse qu'il est possible d'extraire des signaux des satellites d'un système de positionnement après leur passage par un transpondeur monté sur un mobile.

Elle a pour objet, un système de suivi d'un mobile à partir d'une station de surveillance au moyen de signaux émis par des satellites d'un système de positionnement et, transposés en fréquence et relayés par un transpondeur placé à bord du mobile, les dits signaux émis par les satellites du système de positionnement résultant chacun de la modulation d'une porteuse par un code d'étalement.

Ce système de suivi de mobile comporte:

à bord du mobile,

- un transpondeur réémettant les signaux des satellites du système de positionnement après une transposition

3

en fréquence infradyne au moyen d'une porteuse de transposition de fréquence $KF_Q$ supérieure à celle $F_0$ des signaux des satellites, en associant aux signaux réémis un pilote de transposition $F_Q$ représentatif de la phase et de la fréquence de la porteuse de transposition $KF_Q$, et,

à la station de surveillance,

- un récepteur sensible aux signaux réémis par le transpondeur, comportant:

    - une partie traitement de signal incorporant un étage de démodulation avec une boucle de récupération de code d'étalement imbriquée dans une boucle de récupération de porteuse, chacune asservie sur son propre signal d'erreur, le signal d'erreur de la boucle de récupération de code étant représentatif du retard affectant, en réception, le code d'étalement du signal en cours de démodulation et le signal d'erreur de la boucle de récupération de porteuse étant représentatif de l'écart de fréquence affectant, en réception, la porteuse du signal en cours de démodulation,
    - une partie de détermination de l'écart de fréquence $K\Delta F_2$, par rapport à sa valeur de consigne, de la porteuse de transposition utilisée par le transpondeur, opérant à partir du pilote de transposition reçu du transpondeur,
    - des moyens pour corriger le signal d'erreur de la boucle de récupération de porteuse du biais provoqué par l'écart de fréquence $K\Delta F_2$ déterminé par la partie de détermination d'écart de fréquence, et
    - une partie d'exploitation de signal extrayant des informations sur la position et la vitesse du mobile, des signaux d'erreur de la boucle de récupération de code et de la boucle de récupération de porteuse de la partie traitement, le signal d'erreur de la boucle de récupération de porteuse étant corrigé au préalable de l'écart de fréquence $K\Delta F_2$ délivré par la partie de détermination d'écart de fréquence.

Il est remarquable en ce qu'il comporte,
au niveau de la station de surveillance,

- des moyens pour interpréter le signal d'erreur de la boucle de récupération de porteuse, après correction du biais provoqué par l'écart de fréquence $K\Delta F_2$ déterminé par la partie de détermination d'écart de fréquence en tant que mesure représentative de l'effet Doppler provoqué, sur la fréquence initiale $F_0$ du signal relayé par le transpondeur, par une vitesse de rapprochement correspondant à la somme des vitesses d'éloignement relatif mobile-satellite $V_{OS}$ et mobile-récepteur $V_{OR}$.

Avantageusement, la partie du récepteur relative à la détermination de l'écart de fréquence affectant la porteuse de transposition du transpondeur comporte:

- une boucle de récupération du pilote de transposition,
- un circuit de mesure de l'écart de fréquence du pilote de transposition par rapport à une valeur de consigne, et
- un premier circuit de mise à échelle opérant sur le signal d'erreur délivré par le circuit de mesure d'écart pour tenir compte du rapport K existant entre le pilote de transposition et la porteuse de transposition.

Avantageusement, le signal d'estimation de l'erreur de fréquence commise par le transpondeur, engendré par la partie de détermination d'écart du récepteur est ajouté au signal d'erreur de la boucle de récupération de porteuse avant son utilisation par cette dernière.

En variante, le signal d'estimation de l'erreur de fréquence commise par le transpondeur, engendré par la partie de détermination d'écart du récepteur est retranché au signal d'erreur de la boucle de récupération de porteuse avant son utilisation par la partie exploitation de signal du récepteur.

Avantageusement, la boucle de récupération de code d'étalement est aidée par le signal d'erreur de la boucle de récupération de porteuse, pondéré dans le rapport existant entre la fréquence du code d'étalement et la fréquence porteuse du signal à son origine dans le satellite.

D'autres caractéristiques et avantages de l'invention ressortiront de la description ci-après d'un mode de réalisation donné à titre d'exemple. Cette description sera faite en regard du dessin dans lequel:

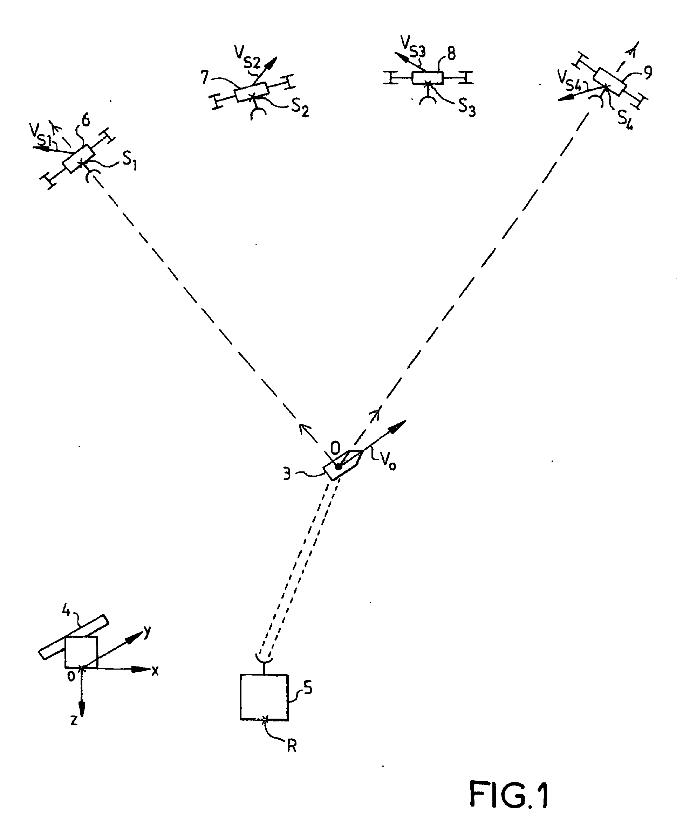

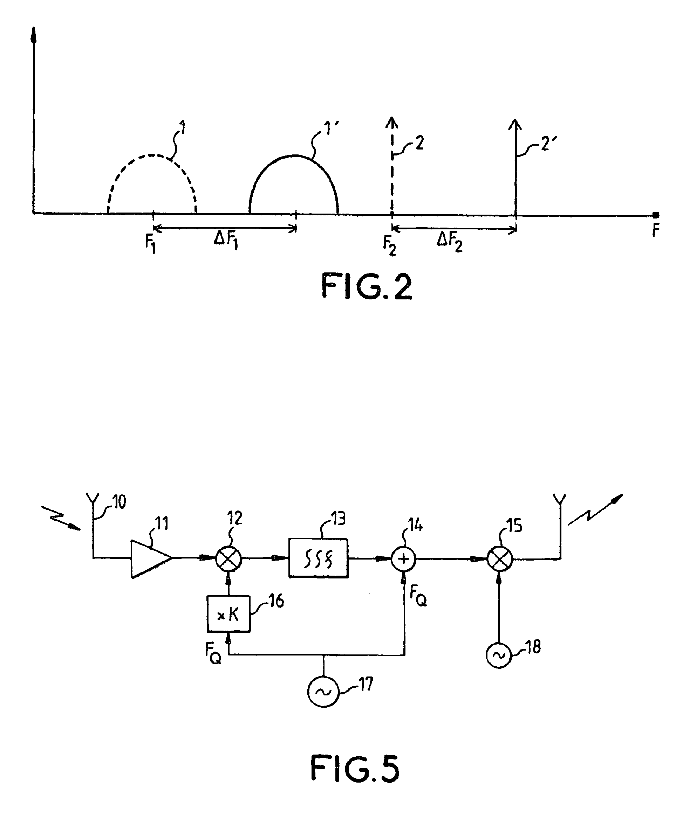

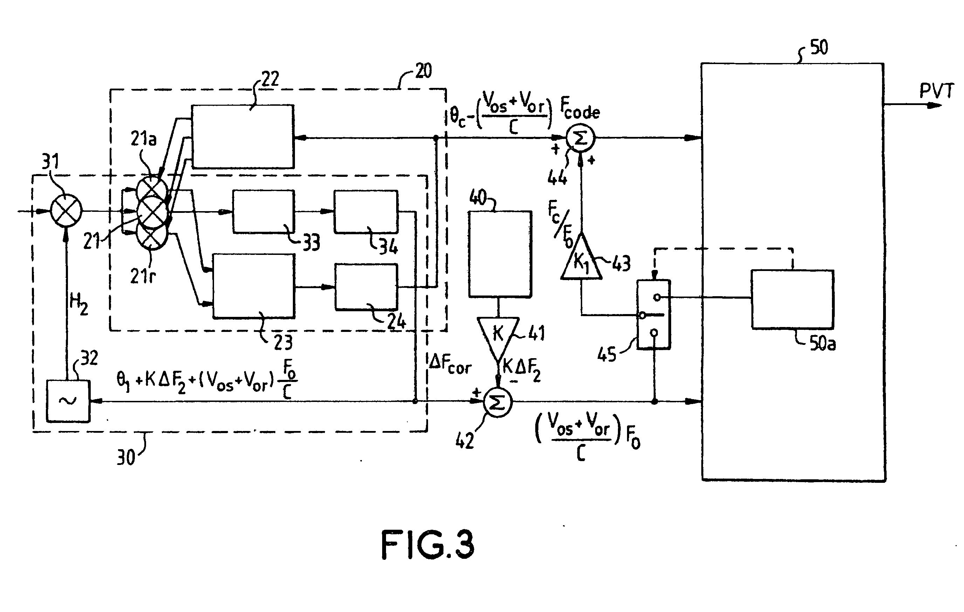

- une figure 1 est un schéma de situation illustrant les positions, vecteurs vitesse et déplacements des acteurs principaux participant à un système de suivi d'un mobile mettant en oeuvre les signaux de satellites d'un système de positionnement relayés par un transpondeur placé à bord du mobile et reçus par une station sol,
- une figure 2 est un diagramme, dans le domaine des fréquences, illustrant le problème posé, en réception, par des effets Doppler de diverses origines et par le biais d'horloge d'un transpondeur,
- une figure 3 est un schéma d'un premier mode de réalisation d'un démodulateur appartenant au récepteur d'un système de suivi d'un mobile selon l'invention,

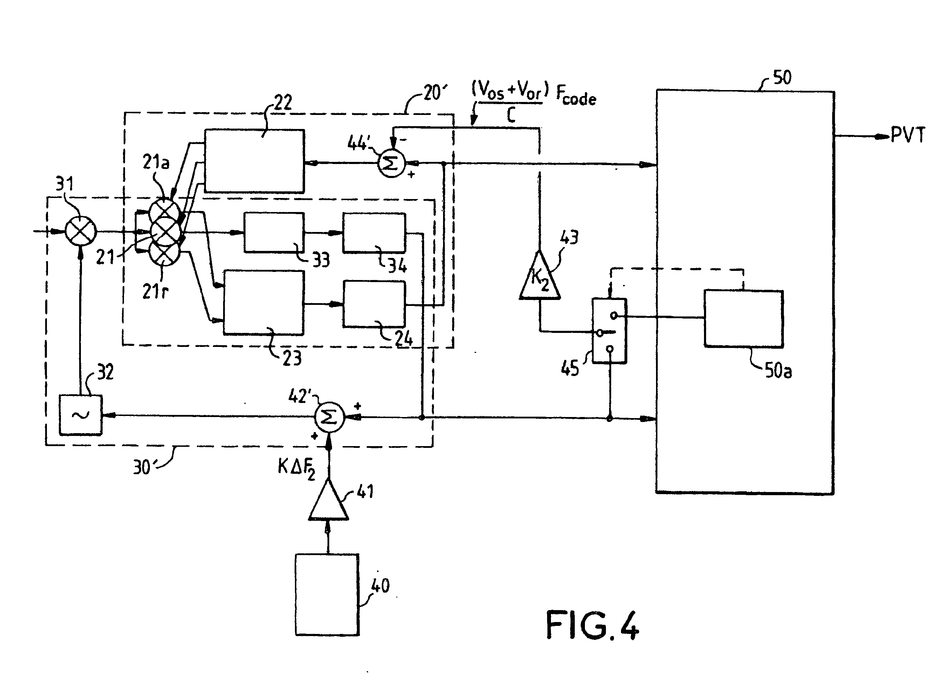

- une figure 4 est un schéma d'un deuxième mode de réalisation d'un démodulateur appartenant au récepteur d'un système de suivi d'un mobile selon l'invention, et
- une figure 5 est un exemple de schéma de transpondeur.

La figure 1 illustre schématiquement le cas d'un obus 3 tiré par un canon 4, dont la trajectoire est mesurée dans une station de surveillance 5, placée au sol, utilisant un système de positionnement par satellites dont quatre satellites visibles 6, 7, 8, 9 sont représentés. L'obus 3 est équipé d'un transpondeur lui permettant de retransmettre les signaux des satellites visibles 6, 7, 8, 9 du système de positionnement, à la station de surveillance 5, sous une forme permettant de distinguer les signaux retransmis des signaux originaux. La station de surveillance 5 est capable de traiter les signaux des satellites 6, 7, 8, 9 du système de positionnement qu'ils lui proviennent directement ou par l'intermédiaire du transpondeur de l'obus 3, les signaux reçus directement lui permettant de se localiser avec précision et donc de localiser aussi le canon 4 avec précision, et les signaux relayés par le transpondeur de l'obus 3 lui permettant de localiser l'obus. Dans la suite, on s'intéresse plus particulièrement aux signaux relayés par le transpondeur de l'obus 3.

Pour parvenir à la station de surveillance 5, les signaux des satellites 6, 7, 8, 9 du système de positionnement relayés par le transpondeur de l'obus 3 suivent une première partie de trajet menant du satellite considéré 6, 7, 8 ou 9 à l'obus 3, puis une deuxième partie de trajet allant de l'obus 3 à la station de surveillance 5. Sur les deux parties de leur trajet, ils subissent des effets Doppler.

Comme cela est bien connu, l'effet Doppler provoque à la réception d'une onde de fréquence f, un décalage en fréquence $\Delta f$ qui, lorsque les vitesses de déplacement de l'émetteur de l'onde et du récepteur de l'onde sont faibles par rapport à celle C de la lumière adoptée pour vitesse de propagation des ondes, est égal au produit de la fréquence f de l'onde par la vitesse $V_{rap}$ de rapprochement de l'émetteur et du récepteur, divisé par la vitesse C de la lumière:

$$\Delta f = f \times \frac{V_{rap}}{C}$$

Sur la première partie de trajet allant du satellite considéré 5, 6, 7, 8 ou 9 à l'obus 3, la vitesse de rapprochement à prendre en compte pour l'effet Doppler est la vitesse de rapprochement entre l'obus 3 et le satellite considéré. Si l'obus 3 est en une position O avec un vecteur vitesse $\overrightarrow{V_O}$ et le satellite considéré 6, 7, 8 ou 9 en une position Si avec un vecteur vitesse $\overrightarrow{V_{Si}}$ (les deux vecteurs vitesse étant définis par rapport à un référentiel commun lié au globe terrestre), cette vitesse de rapprochement $V_{rap\,OSi}$ s'exprime par la relation:

$$V_{rapOSi} = \frac{\overrightarrow{OS_i}}{\left\|\overrightarrow{OS_i}\right\|} . \overrightarrow{V_O} + \frac{\overrightarrow{S_iO}}{\left\|\overrightarrow{S_iO}\right\|} . \overrightarrow{V_{Si}}$$

qui se met sous la forme:

$$V_{rapOSi} = \frac{\overrightarrow{OS_i}}{\left\|\overrightarrow{OS_i}\right\|} . \left(\overrightarrow{V_O} - \overrightarrow{V_{Si}}\right)$$

La fréquence de l'onde à considérer est soit la cadence du débit de la séquence binaire pseudo-aléatoire du code d'étalement si l'on s'intéresse à l'effet Doppler affectant en réception l'horloge code, soit la fréquence de la porteuse émise par le satellite considéré si l'on s'intéresse à l'effet Doppler affectant en réception la porteuse du signal.

Sur la deuxième partie de trajet allant de l'obus 3 à la station de surveillance 5, la vitesse de rapprochement à prendre en compte pour l'effet Doppler est la vitesse de rapprochement entre la station de surveillance 5 et l'obus 3. En supposant que la station de surveillance 5 est immobile sur le sol en un point R, cette vitesse de rapprochement $V_{rap\,RO}$ s'exprime par la relation:

$$V_{rapOR} = \frac{\overrightarrow{OR}}{\left\|\overrightarrow{OR}\right\|} . \overrightarrow{V_O}$$

La fréquence de l'onde à considérer est, soit, comme précédemment, la cadence du débit de la séquence binaire pseudo-aléatoire du code d'étalement, soit la fréquence de la porteuse initiale provenant du satellite après sa transposition dans le transpondeur effectuant le relayage.

La figure 2 illustre les conséquences du biais d'horloge d'un transpondeur sur la position spectrale attendue des signaux de satellites d'un système de positionnement GPS après leur passage par un transpondeur lorsque celui-ci effectue un changement de fréquence.

Les signaux émis par un satellite GPS sont constitués de deux porteuses en bande L, à 1 575,42 MHz et 1 227,6 MHz modulées en phase, par soit par un code d'étalement constitué d'une suite binaire pseudo-aléatoire ayant un débit de 1,023 MHz, soit par un code d'étalement constitué par une suite binaire pseudo-aléatoire ayant un débit de 10,23 MHz, soit simultanément, en quadrature par les deux codes d'étalement précédents, et surmodulées en biphase par des données à faibles débit (50Hz).

Pour la suite, on ne considérera que le code d'étalement au débit le plus faible de 1,023 MHz, les raisonnements faits pouvant être facilement transposés pour l'autre code d'étalement au débit plus rapide de 10,23 MHz.

Le code d'étalement au débit de 1,023 MHz occupe une largeur de bande de 2,048 MHz. En modulant en phase une porteuse, il engendre un signal d'émission occupant une bande de largeur double 4,096 MHz centré sur la porteuse, soit 1 575,42 MHz, soit 1 227,6 MHz. Pour tenir compte de l'effet Doppler, on prend une certaine marge de sécurité et l'on suppose qu'il occupe une fenêtre un peu plus large de 4,58 MHz.

Un transpondeur, lorsqu'il réémet un tel signal, le translate en fréquence dans une bande adaptée à la retransmission. Pour ce faire, il utilise une fréquence de transposition qu'il engendre à partir d'une horloge interne plus ou moins précise mais indépendante de celle des satellites GPS. Le biais et la dérive de cette horloge entraînent un biais et une dérive dans le changement de fréquence réalisé par le transpondeur, que l'on retrouve, en réception, dans le signal d'erreur d'une boucle de récupération de porteuse. Pour estimer, en réception, ce biais et cette dérive sur la fréquence centrale du signal réémis par le transpondeur, il est habituel de faire émettre par le transpondeur un pilote de transposition par lequel un récepteur peut remonter à la fréquence effective de l'horloge du transpondeur.

La figure 2 résume la situation face à laquelle on se trouve en présence d'une réémission, avec changement de fréquence, d'un signal de satellite GPS, par un transpondeur engendrant également un pilote de transposition.

On s'attend, en théorie, à trouver le signal du satellite GPS dans une fenêtre spectrale 1 centrée sur une fréquence $F_1$ alors que le transpondeur le déplace dans une fenêtre spectrale 1' centrée sur une fréquence $F_1+\Delta F_1$. On s'attend à un pilote de transposition 2 à la fréquence $F_2$ alors que l'on trouve un pilote de transposition 2' à la fréquence $F_2+\Delta F_2$.

Soient:

- $\Delta F_Q$ l'écart par rapport à la fréquence de consigne $F_2$ affectant le pilote de transposition effectivement engendré par le transpondeur,
- $V_{rap\ OR}$ la vitesse radiale de rapprochement existant entre le porteur du transpondeur et le récepteur de la station de surveillance fixe au sol exploitant les signaux du transpondeur, et
- C la vitesse de la lumière que l'on adopte, par approximation, pour vitesse de propagation des ondes radioélectriques.

L'écart en fréquence $\Delta F_2$ affectant le pilote de transposition tel qu'il est perçu depuis le récepteur exploitant les signaux du transpondeur s'exprime en fonction de l'écart réel en fréquence $\Delta F_Q$ affectant le pilote de transposition lors de sa génération dans le transpondeur par la relation:

$$\Delta F_2 = \Delta F_Q + \frac{V_{rapOR}}{C} \times \left(F_2 + \Delta F_Q\right)$$

ou encore :

$$\Delta F_2 = \Delta F_Q + \frac{\overrightarrow{OR}}{\left\|\overrightarrow{OR}\right\|} . \overrightarrow{V_o} \times \frac{\left(F_2 + \Delta F_Q\right)}{C}$$

ou en faisant apparaître la vitesse radiale $V_{OR}$ de l'obus par rapport au récepteur qui est prise positive lorsque celui-ci s'éloigne :

$$\Delta F_2 = \Delta F_Q - \frac{V_{OR}}{C} \times \left(F_2 + \Delta F_Q\right) \qquad (1)$$

Cet écart prend également en compte l'effet Doppler, sur la fréquence initiale $F_2 + \Delta F_Q$ du pilote de transposition, résultant du déplacement relatif du porteur du transpondeur par rapport au récepteur exploitant les signaux du transpondeur.

Soient:

- $F_0$ la fréquence porteuse du signal émis initialement par un satellite du système de positionnement,
- $V_{rap\,OSi}$ la vitesse radiale de rapprochement entre le satellite émetteur du signal et le porteur du transpondeur, et
- K le rapport existant au sein du transpondeur entre la porteuse et le pilote de transposition.

L'écart en fréquence $\Delta F_1$ affectant la fréquence de transposition $F_1$ qui est la fréquence porteuse du signal émis par le satellite après sa transposition dans le transpondeur, tel qu'il est perçu depuis le récepteur exploitant les signaux du transpondeur, dépend de la bande latérale utilisée lors de la transposition. En considérant que la bande latérale utilisée lors de la transposition est la bande latérale inférieure, cet écart $\Delta F_1$ s'exprime en fonction de l'écart en fréquence $K\Delta F_Q$ affectant la porteuse de transposition et des deux effets Doppler successifs par la relation :

$$\alpha\Delta F_1 = K\Delta F_Q + \frac{V_{rapRO}}{C} \times \left(F_1 + K\Delta F_Q\right) - \frac{V_{rapOSi}}{C} \times F_0$$

$\alpha$ étant un signe positif lorsque la porteuse de transposition est supérieure à $F_0$ et un signe négatif dans le cas contraire :

$$F_1 = \alpha\left(KF_Q - F_0\right)$$

ou en faisant apparaître la vitesse radiale $V_{OR}$ de l'obus par rapport au récepteur qui est prise positive lorsque celui-ci s'éloigne, et la vitesse radiale $V_{OSi}$ du satellite par rapport à l'obus, qui est prise positive lorsque le satellite s'éloigne de l'obus :

$$\alpha\Delta F_1 = K\Delta F_Q - \frac{V_{OR}}{C} \times \left(F_1 + K\Delta F_Q\right) + \frac{V_{OSi}}{C} \times F_0 \qquad (2)$$

Cet écart prend en compte à la fois l'effet Doppler dû au déplacement relatif du porteur du transpondeur par rapport au récepteur exploitant les signaux du transpondeur et l'effet Doppler dû au déplacement relatif du porteur du transpondeur par rapport au satellite à l'origine du signal retransmis. Il peut encore se mettre sous la forme :

$$\alpha\Delta F_{1} = K\Delta F_{Q} - \frac{V_{OR}}{C} \times \left(\alpha K F_{Q} - \alpha F_{0} + K\Delta F_{Q}\right) + \frac{V_{OSi}}{C} \times F_{0} \qquad (3)$$

qui sera utile dans la suite.

Pour ce qui concerne l'écart $\Delta F_{C}$ de la fréquence du code vue depuis le récepteur par rapport à sa valeur de consigne, il est dû à la combinaison d'un premier effet Doppler sur cette même fréquence en début de trajet du signal, lorsqu'il se propage de son satellite d'origine au porteur du transpondeur et d'un deuxième effet Doppler toujours sur cette même fréquence lorsque le signal se propage du transpondeur au récepteur. Avec les conventions d'écriture adoptées précédemment sur les vitesses, on peut écrire, en première approximation (c'est-à-dire, si l'on ne tient pas compte des termes croisés mettant à contribution le produit des deux vitesses de rapprochement sur le carré de la vitesse de la lumière dont l'influence est très faible par rapport à celle des autres termes) :

$$\Delta F_{C} = -\frac{V_{OS}}{C} \times F_{code} - \frac{V_{OR}}{C} \times F_{code} = -\frac{\left(V_{OS} + V_{OR}\right)}{C} \times F_{code} \qquad (4)$$

Le signal d'erreur de la boucle de récupération de code est exploité, en dehors de la boucle de récupération de code, pour son retard ou son déphasage qui est proportionnel à une pseudo-distance constituée de la somme des distances séparant le mobile porteur du transpondeur d'une part, du satellite à l'origine du signal et d'autre part, du récepteur. Sa composante fréquentielle exprimée par la relation (4) constitue un terme parasite pour le traitement effectué en dehors du démodulateur par la partie exploitation de signal du récepteur.

Le signal d'erreur de la boucle de récupération de porteuse, une fois privé de sa composante due à l'imprécision de la porteuse de transposition du transpondeur, n'a plus pour origine que des effets Doppler. Il est donc porteur d'informations sur les vitesses des déplacements relatifs du porteur du transpondeur vis à vis du satellite du système de positionnement à l'origine du signal traité dans le récepteur et vis à vis du récepteur. Pour qu'il soit exploitable et conduise à des informations de pseudo-vitesse cohérentes avec les informations de pseudo-distance tirées du retard de la boucle de récupération de code, il faut qu'il découle d'effets Doppler s'appliquant à une fréquence unique connue et provenant des vitesses des déplacements relatifs rencontrés sur les trajets correspondant aux pseudo-distances mesurées par ailleurs au moyen du déphasage du signal d'erreur de la boucle de récupération de porteuse. La relation (3) montre que ce n'est généralement pas le cas. Il n'est donc pas possible, dans le cas général, d'extraire, de manière simple, des informations de pseudo-vitesse du signal d'erreur de la boucle de récupération de porteuse. On contourne habituellement cette difficulté en obtenant les pseudo-vitesses par dérivation des pseudo-distances, ce qui revient à ne pas exploiter les informations contenues dans le signal d'asservissement de la boucle de récupération de porteuse et donc à une perte d'informations.

On se propose de rendre le signal d'erreur de la boucle de récupération de porteuse exploitable pour des informations de pseudo-vitesse cohérentes avec les informations de pseudo-distance déduites du retard de la boucle de récupération de code.

Pour rendre le signal d'erreur de la boucle de récupération de porteuse exploitable pour des informations de pseudo-vitesse cohérentes avec les informations de pseudo-distance déduites du retard de la boucle de récupération de code il faut faire ressortir dans ce signal d'erreur des effets Doppler ne portant que sur une fréquence unique. Dans le but de pouvoir facilement corriger l'effet Doppler parasite affectant le signal d'asservissement de la boucle de récupération de code (relation (4)) on recherche l'obtention, à partir du signal d'erreur de boucle de récupération de porteuse, d'une unique composante Doppler de la forme:

$$\pm \frac{\left(V_{OS} + V_{OR}\right)}{C} \times F_{0}$$

Cela revient à définir un terme correctif $\Delta F_{cor}$, par exemple, par le système de relations:

$$
\begin{cases}
\alpha \Delta F_1 = K \Delta F_Q + \dfrac{(V_{OS} + V_{OR})}{C} F_0 + \Delta F_{cor} \\[4mm]
\alpha \Delta F_1 = K \Delta F_Q - \dfrac{V_{OR}}{C} \times (\alpha K F_Q - \alpha F_0 + K \Delta F_Q) + \dfrac{V_{OS_1}}{C} \times F_0
\end{cases}
$$

d'où l'on tire la définition du terme correctif $\Delta F_{cor}$:

$$
\Delta F_{cor} = (\alpha - 1) \frac{V_{OR}}{C} F_0 - K \frac{V_{OR}}{C} (\alpha F_Q + \Delta F_Q) \qquad (5)
$$

On constate que, dans le cas où le coefficient de signe $\alpha$ est positif, le terme correctif $\Delta F_{cor}$ correspond à K fois l'effet Doppler affectant le pilote de transposition (relation 1). En apportant ce terme correctif à la fréquence apparente $F_1$ de la porteuse captée au niveau du récepteur, il est alors possible d'obtenir une fréquence apparente de porteuse corrigée affectée d'un décalage en fréquence correspondant à celui qu'un effet Doppler apporterait à la fréquence porteuse $F_0$ si le récepteur et le satellite à l'origine du signal avaient une vitesse de rapprochement relatif égale à la somme des vitesses d'éloignement radiales Vos et $V_{OR}$. Comme c'est, au signe près, le décalage Doppler affectant la fréquence code $F_C$ on récupère alors la cohérence entre mesure de distance et mesure de vitesse, ce qui est l'objectif recherché.

La figure 3 illustre une première façon d'utiliser un tel signal de correction dans un étage de démodulation d'un récepteur traitant des signaux de satellites de positionnement relayés au niveau d'un mobile, par un transpondeur effectuant une transposition de fréquence infradyne, c'est-à-dire au moyen d'une bande latérale inférieure, obtenue avec une porteuse de transposition $KF_Q$ supérieure à la porteuse $F_0$ d'un signal provenant d'un satellite du système de positionnement, ce qui correspond à un type d'architecture pour lequel le coefficient de signe $\alpha$ est positif, et émettant un pilote de transposition $F_2$.

Cet étage de démodulation est disposé, à l'intérieur d'un récepteur de positionnement par satellites, devant une partie 50 d'exploitation de signal et après différents étages d'entrée non représentés. La partie d'exploitation de signal 50 fournit les pseudo-distance et pseudo-vitesse du mobile porteur du transpondeur par rapport aux différents satellites visibles du système de positionnement ainsi que la position et le vecteur vitesse du mobile porteur du transpondeur et l'horloge du système de positionnement. Les différents étages d'entrée du récepteur de positionnement par satellites placés en amont de l'étage de démodulation effectuent un prétraitement du signal du transpondeur permettant de lui retirer une éventuelle porteuse auxiliaire de transmission, de le ramener en bande vidéo, de l'échantillonner et de le numériser afin qu'il se présente sous la forme d'une suite d'échantillons numériques complexes, c'est à dire avec une composante en phase et une composante en quadrature, adaptée à un traitement numérique.

Pour simplifier la figure, les filtres que l'on trouve classiquement avant et après les démodulateurs pour supprimer les bandes parasites et réduire le bruit ont été omis, et les signaux de satellites considérés sous leur forme complexe.

On distingue essentiellement dans cet étage de démodulation, une boucle de récupération de code 20 imbriquée dans une boucle de récupération de porteuse 30. Les signaux de satellites relayés par le transpondeur et transposés en bande vidéo sont tout d'abord soumis à un détecteur synchrone 31 opérant à l'aide d'une porteuse locale $H_L$ délivrée par un générateur de porteuse locale 32 faisant partie de la boucle de récupération de porteuse 30. En sortie du détecteur synchrone 31, les signaux de satellites, qui sont disponibles en bande de base mais toujours en bande étalée, sont désétalés par un corrélateur 21 avec des codes d'étalement engendrés localement par un générateur local de codes d'étalement 22 faisant partie de la boucle de récupération de code 20.

La boucle de récupération de code d'étalement est une boucle classique à fenêtre de corrélation. Elle tire son signal d'asservissement de la comparaison des valeurs de corrélation du signal avec deux versions locales du code d'étalement décalées d'un délai constant, l'une A en avance, l'autre R en retard sur une version locale du code d'étalement P dite en phase utilisée effectivement pour le désétalement du signal. Elle recherche la position dans le temps de ces versions en avance A et en retard R du code local conduisant à des corrélations de valeurs identiques avec le signal à désétaler. En effet, la loi de variation de la valeur de corrélation entre le signal à désétaler et son code d'étalement supposé, en fonction de l'erreur de positionnement de l'un par rapport à l'autre, présente une forme triangulaire avec un maximum lorsque l'erreur s'annule. De part et d'autre de ce maximum, la valeur de la corrélation décroît progressivement. Si les délais d'avance et de retard sont choisis inférieurs à la demi-largeur de la base du triangle de la fonction de corrélation, la recherche de valeurs identiques de corrélation pour les versions en avance et en retard du code local d'étalement permet d'encadrer le maximum et de faire coïncider la version en phase du code local d'étalement avec le code du signal à désétaler.

Pour ce faire, la boucle de récupération de code d'étalement 20 comporte deux corrélateurs auxiliaires 21 a, 21 r, un générateur local de code d'étalement 22 fournissant les trois versions décalées entre elles dans le temps, du code d'étalement voulu, un comparateur 23 connecté en sortie des corrélateurs auxiliaires 21 a et 21 r et un filtre de boucle 24 fournissant un signal d'asservissement utilisé pour agir sur le rythme du générateur local de code d'étalement 22 afin de parvenir à faire coïncider le code local d'étalement avec celui du signal à désétaler.

Cette boucle de récupération de code d'étalement à fenêtre de corrélation, qui opère à partir d'un critère d'erreur basé sur des considérations énergétiques est peu sensible aux erreurs de phase affectant la porteuse locale.

La boucle de récupération de porteuse tire son signal d'asservissement du signal désétalé issu du corrélateur 21 opérant avec la version en phase P du code d'étalement au moyen d'un circuit 33 d'extraction d'une raie harmonique de la porteuse utilisant par exemple la technique de Costas. Comme à l'habitude, un filtre de boucle 34 est intercalé entre la commande de phase de l'oscillateur de porteuse locale 32 et le circuit d'extraction d'une raie harmonique 33.

Le code d'étalement est spécifique d'un satellite du système de positionnement. Il permet de séparer en réception, les signaux émis par les différents satellites visibles du système de positionnement. Lorsque le code d'étalement local et la porteuse locale sont synchrones, la démodulation et le désétalement permettent d'avoir accès à des données émises par les satellites précisant leurs positions et leur horloge. Ces informations ne sont pas ici essentielles puisqu'une station de traitement peut les obtenir à partir des signaux qu'elle reçoit directement des satellites. Par contre le retard du code local d'étalement et l'écart de fréquence de la porteuse locale par rapport à la porteuse d'émission fournissent des informations sur le délai de transmission et sur les effets Doppler dont on peut espérer tirer des renseignements sur la position et le vecteur vitesse du mobile.

Comme on l'a vu précédemment (relation 4), l'horloge code du signal reçu est affectée, en plus d'un déphasage $\Theta_C$ dû au délai de transmission, d'un écart de fréquence apparent $\Delta F_C$ :

$$\Delta F_C = -\frac{(V_{OS} + V_{OR})}{C} \times F_{code}$$

de sorte que le signal d'asservissement de la boucle de récupération de code, qui est accessible en sortie du filtre de boucle 24 et qui contrôle l'horloge du générateur local de code 22 par rapport à une référence de phase absolue constituée de la phase du code à l'émission par un satellite et tirée des données transmises par les satellites, présente, lorsque cette boucle est verrouillée, une composante continue fonction du déphasage $\Theta_C$ et une composante alternative fonction de l'écart de fréquence apparent $\Delta F_C$.

Lors du traitement ultérieur de ce signal par la partie exploitation de signal 50 du récepteur, seule sa composante continue est utile, puisqu'elle permet, en relation avec une information sur la phase du générateur de code utilisé à l'émission, transmise par l'intermédiaire des données émises par les satellites, d'apprécier le déphasage effectif du code local sur le code d'émission et donc le délai de transmission. La composante alternative est un terme parasite inopportun.

La porteuse du signal reçu est affectée d'un déphasage $\Theta_1$ dû au délai de transmission et d'un écart apparent de fréquence $\Delta F_1$ qui est donnée par la relation :

$$\alpha \Delta F_1 = K\Delta F_Q - \frac{V_{OR}}{C} \times (KF_Q + K\Delta F_Q) + \left(\frac{V_{OSi}}{C} + \frac{V_{OR}}{C}\right) \times F_0$$

tirée de la relation (3) en posant : $\alpha = 1$
ou encore, en tenant compte de la relation (1) :

$$\alpha \Delta F_1 = K\Delta F_2 + \left(\frac{V_{OSi}}{C} + \frac{V_{OR}}{C}\right) \times F_0$$

avec :

$$\Delta F_{cor} = K \Delta F_2$$

de sorte que le signal d'asservissement de la boucle de récupération de porteuse qui est disponible en sortie du filtre de boucle 34 et qui contrôle le générateur local de porteuse 32, par rapport à une référence de phase relative constituée de la phase apparente de la porteuse du signal reçu, présente, lorsque cette boucle est verrouillée, une composante alternative ayant deux origines différentes:

- l'écart $K\Delta F_2$, par rapport à sa valeur nominale, affectant la fréquence apparente de la porteuse de transposition vue depuis le récepteur, et
- un décalage Doppler affectant la porteuse $F_0$ du signal initial de satellite du système de positionnement en raison des mouvements relatifs mobile-satellite et mobile-récepteur.

La composante $K\Delta F_2$ représentant l'écart de la porteuse de transposition du transpondeur vue depuis le récepteur, par rapport à sa valeur nominale est un terme parasite pour le traitement ultérieur de ce signal par la partie exploitation de signal 50 du récepteur qui a la charge d'extraire, de ce signal d'asservissement de boucle de récupération de porteuse, la pseudo-vitesse. Elle est supprimée au moyen d'un circuit soustracteur 42 qui reçoit sur son autre entrée, une estimation de sa valeur délivrée par un circuit de détection d'écart de fréquence de l'horloge de transposition 40 suivi d'un circuit de mise à l'échelle 41.

Le circuit 40 de détection d'écart de fréquence de l'horloge de transposition utilise la présence du pilote de transposition dans le signal réémis par le transpondeur pour mesurer son écart de fréquence par rapport à sa valeur nominale. Il comporte une boucle de récupération du pilote de transposition dont l'entrée est connectée en parallèle sur celle du démodulateur et un circuit de mesure de l'écart de fréquence existant entre le pilote de transposition récupéré et sa valeur de consigne fournie par un étalon de fréquence.

Le circuit de mise à l'échelle 41 multiplie l'écart de fréquence délivré par le circuit de détection 40, par le rapport K existant entre la fréquence du pilote de transposition $F_2$ et la porteuse de transposition utilisée par le transpondeur, et délivre l'écart de fréquence $K\Delta F_2$ qui est alors appliqué au soustracteur 42 intercalé sur la liaison menant le signal d'asservissement de la boucle de récupération de porteuse 30 à la partie exploitation de signal 50 du récepteur.

On dispose ainsi, en sortie du soustracteur 42 d'un signal résultant d'une combinaison de deux effets Doppler sur une même fréquence $F_0$ qui est exploitable et permet d'accéder à la pseudo-vitesse $V_{OS}$ du mobile puisque l'on peut éliminer la vitesse radiale de rapprochement obus-récepteur $V_{OR}$ entre les signaux provenant des différents satellites visibles en la considérant comme une erreur de mode commun.

Le signal disponible en sortie du soustracteur 42 est appliqué à la partie d'exploitation de signal 50 du récepteur pour en extraire la pseudo-vitesse du mobile. Il est également utilisé pour éliminer, du signal d'asservissement de la boucle de récupération de code d'étalement 20, sa composante alternative inopportune:

$$-\frac{(V_{os} + V_{oss})}{C} \times F_{code}$$

avant de procéder à l'extraction de la pseudo-distance du mobile. Pour ce faire, le signal disponible en sortie du soustracteur 42 est soumis à un circuit de mise à échelle 43 qui l'affecte d'un rapport d'échelle $K_1$ :

$$K_1 = \frac{F_{code}}{F_0}$$

puis additionné au signal d'erreur de la boucle de récupération de code 20 par un additionneur 44. La pseudo-distance est issue des registres de l'accumulateur 22.

En pratique, la boucle de récupération de porteuse présente à sa mise en route un certain temps d'accrochage qui fait que la correction du signal d'asservissement de la boucle de code avant son exploitation par la partie exploitation 50 de signal du récepteur n'est efficace qu'avec un certain retard. Pour améliorer l'efficacité de cette correction, on remplace momentanément, pendant la période d'accrochage de la boucle de récupération de porteuse 30, au moyen d'un aiguillage de signaux 45, le signal provenant de la boucle de récupération de porteuse par un signal synthétisé dans un circuit 50a de la partie exploitation 50 de signal du récepteur qui déroule un modèle balistique du mouvement du mobile à son départ.

La figure 4 montre une variante du circuit de démodulation précédent dans laquelle les corrections apportées aux signaux d'asservissement des boucles de récupération de code et de porteuse, avant leur application à la partie traitement de signal 50 du récepteur du système de positionnement, sont faites à l'intérieur des boucles elles-mêmes, ce qui permet de réduire les plages de variation des signaux d'asservissement de ces boucles et donc d'améliorer leurs performances en poursuite et capture.

Sur cette figure 4, les éléments inchangés par rapport au schéma de la figure précédente 3 conservent les mêmes indices.

La correction $K\Delta F_2$ effectuée sur le signal d'asservissement de la boucle de récupération de porteuse 30' est faite à l'intérieure même de cette boucle au moyen d'un additionneur 42' intercalé devant l'entrée de commande de l'oscillateur local de porteuse 32. De la même manière, la correction d'effet Doppler effectuée sur le signal d'asservissement de la boucle de récupération de code 20' est faite à l'intérieur de cette boucle au moyen d'un soustracteur 44' intercalé devant l'entrée de commande du générateur local de code 22.

La figure 5 montre un exemple d'architecture de transpondeur utilisable avec le récepteur de système de positionnement par satellites dont l'étage de démodulation vient d'être détaillé relativement aux figures 3 et 4. Les signaux émis par les satellites du système de positionnement à une fréquence $F_0$ sont reçus, à bord du mobile équipé du transpondeur, par l'antenne de réception 10 de ce dernier. Ils sont alors éventuellement filtrés pour limiter la bande de bruit à la bande utile, amplifiés dans un amplificateur 11 puis soumis à un changement de fréquence au moyen d'un modulateur 12 suivi d'un filtre passe-bas 13 supprimant la bande latérale supérieure résultant de la modulation. Après avoir subi le changement de fréquence, les signaux des satellites, qui se retrouvent à la fréquence $F_1$ se voient ajouter par un circuit sommateur 14 un pilote de transposition à une fréquence $F_2$, puis sont utilisés pour moduler une porteuse de transmission dans un deuxième modulateur 15. La porteuse de transposition est obtenue par multiplication par un coefficient K, dans un circuit multiplieur 16, du signal provenant d'une horloge locale 17 qui sert également de pilote de transposition. La porteuse de transmission est engendrée par un oscillateur particulier 18 qui n'a pas à être d'une grande précision car n'intervenant pas sur les comportements des boucles de récupération de porteuse et de code d'étalement de l'étage de démodulation du récepteur.

Dans le transpondeur, le signal transposé résulte du choix d'une porteuse de transposition de fréquence supérieure à celle du signal capté et du choix d'une bande latérale inférieure. La porteuse de transposition $KF_2$ est liée à la fréquence $F_0$ du signal initialement émis par un satellite du système de positionnement et capté pour un relayage par le transpondeur, et à la fréquence $F_1$ de transposition du signal au sein du transpondeur par la relation :

$$KF_2 = F_0 + F_1$$

Pour faciliter la compréhension, les circuits de démodulation proposés pour le traitement en réception des signaux de satellites d'un système de positionnement relayés par un transpondeur placé à bord d'un mobile, ont été représentés sous forme de schémas constitués d'assemblages de boîtes réalisant différentes fonctions. Dans la pratique, les signaux de satellites sont souvent numérisés dans les étages d'entrées du récepteur, en amont du circuit de démodulation, si bien que tous les traitements qu'ils subissent dans l'étage de démodulation sont des traitements numériques réalisés au moyen d'un ou plusieurs processeurs de signal. Ces processeurs de signal, pilotés par des logiciels, effectuent différentes tâches correspondant aux fonctions évoquées, en parallèle ou en temps partagé, selon un ordre adapté aux techniques numériques mises en oeuvre sans nécessairement respecter le découpage adopté pour la description.

**Revendications**

1. Système de suivi d'un mobile à partir d'une station de surveillance au moyen de signaux émis par des satellites d'un système de positionnement et transposés en fréquence et relayés par un transpondeur placé à bord du mobile, les dits signaux émis par les satellites du système de positionnement résultant chacun de la modulation d'une porteuse par un code d'étalement, ce système de suivi de mobile comportant:

   à bord du mobile,

      - un transpondeur réémettant les signaux des satellites du système de positionnement après une transposition en fréquence infradyne au moyen d'une porteuse de transposition de fréquence $KF_Q$ supérieure à celle $F_0$ des signaux de satellites, en associant un pilote de transposition $F_Q$ représentatif de la phase et de la fréquence de la porteuse utilisée pour la transposition $KF_Q$, et,

à la station de surveillance,

- un récepteur sensible aux signaux réémis par le transpondeur, avec:

    - une partie traitement de signal incorporant un étage de démodulation avec une boucle de récupération de code d'étalement (20, 20') imbriquée dans une boucle de récupération de porteuse (30, 30'), chacune asservie sur son propre signal d'erreur, le signal d'erreur de la boucle de récupération de code (20, 20') étant représentatif du retard affectant, en réception, le code d'étalement du signal en cours de démodulation et le signal d'erreur de la boucle de récupération de porteuse (30, 30') étant représentatif de l'écart de fréquence affectant, en réception, la porteuse du signal en cours de démodulation,

    - une partie (40, 41) de détermination de l'écart de fréquence $K\Delta F_2$, par rapport à sa valeur de consigne, de la porteuse de transposition utilisée par le transpondeur, opérant à partir du pilote de transposition reçu du transpondeur,

    - des moyens pour corriger le signal d'erreur de la boucle de récupération de porteuse, du biais provoqué par l'écart de fréquence $\Delta F_2$ déterminé par la partie de détermination d'écart de fréquence, et

    - une partie (50) d'exploitation de signal extrayant des informations sur la position et la vitesse du mobile, des signaux d'erreur de la boucle de récupération de code (20, 20') et de la boucle de récupération de porteuse (30, 30') de la partie traitement, le signal d'erreur de la boucle de récupération de porteuse étant corrigé au préalable de l'écart de fréquence $K\Delta F_2$ délivré par la partie de détermination d'écart de fréquence (40, 41)

ledit système de suivi de mobile étant **caractérisé en ce qu'**il comporte:
au niveau de la station de surveillance,

    - des moyens (50) pour interpréter le signal d'erreur de la boucle de récupération de porteuse, après correction du biais provoqué par l'écart de fréquence $K\Delta F_2$ déterminé par la partie de détermination d'écart de fréquence (40, 41) en tant que mesure représentative de l'effet Doppler provoqué, sur la fréquence initiale $F_0$ du signal relayé par le transpondeur, par une vitesse de rapprochement correspondant à la somme des vitesses d'éloignement relatif mobile-satellite $V_{OS}$ et mobile-récepteur $V_{OR}$.

2. Système de suivi de mobile selon la revendication 1, **caractérisé en ce que** la partie (40, 41) du récepteur relative à la détermination de l'écart de fréquence affectant la porteuse de transposition du transpondeur comporte:

    - une boucle de récupération du pilote de transposition (40),
    - un circuit (40) de mesure de l'écart de la fréquence du pilote de transposition par rapport à une valeur de consigne, et
    - un premier circuit (41) de mise à échelle opérant sur le signal d'erreur délivré par le circuit de mesure d'écart (40) pour tenir compte du rapport K existant entre le pilote de transposition et la porteuse de transposition.

3. Système de suivi d'un mobile selon la revendication 1, **caractérisé en ce que** le récepteur comporte un premier soustracteur (42) qui est intercalé sur une liaison empruntée par le signal d'erreur de la boucle de récupération de porteuse (30) pour parvenir à la partie exploitation de signal (50) du récepteur et qui retranche, du signal d'erreur de la boucle de récupération de porteuse (30), le signal délivré par la partie (40, 41) de détermination de l'écart de fréquence de la porteuse de transposition.

4. Système de suivi d'un mobile selon la revendication 3, **caractérisé en ce que** le récepteur comporte en outre, un additionneur (44) qui est intercalé sur une liaison empruntée par le signal d'erreur de la boucle de récupération de code (20) pour parvenir à la partie exploitation de signal (50) du récepteur et qui ajoute au signal d'erreur de la boucle de récupération de code, le signal d'erreur de la boucle de récupération de porteuse (30) une fois qu'il a été corrigé de l'erreur de fréquence commise par le transpondeur, et mis à l'échelle dans le rapport de la fréquence code $F_c$ sur la fréquence porteuse $F_0$.

5. Système de suivi d'un mobile selon la revendication 1, avec un récepteur comportant une boucle de récupération de porteuse (30') pourvue d'un oscillateur local (32) piloté par un signal d'erreur, par l'intermédiaire d'une entrée de commande de phase, **caractérisé en ce que** le récepteur comporte un additionneur (42') qui est intercalé dans la boucle de récupération de porteuse (30'), devant l'entrée de commande de phase de l'oscillateur local (32) et qui ajoute au signal d'erreur de la boucle de récupération de porteuse (30'), le signal délivré par la partie (40, 41) de détermination de l'écart de fréquence de la porteuse de transposition

6. Système de suivi d'un mobile selon la revendication 1, avec un récepteur comportant une boucle de récupération de code (20') pourvue d'un générateur local de code (22) dont l'horloge est pilotée par un signal d'erreur, par l'intermédiaire d'une entrée de commande de phase **caractérisé en ce que** le récepteur comporte en outre un soustracteur (44') qui est intercalé dans la boucle de récupération de code (20') devant l'entrée de commande de phase de l'horloge du générateur local de code (22) du récepteur et qui retranche au signal d'erreur de la boucle de récupération de code (20'), le signal d'erreur de la boucle de récupération de porteuse (30) une fois qu'il a été corrigé de l'erreur de fréquence commise par le transpondeur et mis à l'échelle dans le rapport de la fréquence code $F_c$ sur la fréquence porteuse $F_0$ délivré par la partie (40, 41) de détermination de l'écart de fréquence de la porteuse de transposition.

## Claims

1. System for tracking a craft from a monitoring station by means of signals transmitted by satellites of a positioning system and frequency-transposed and relayed by a transponder placed onboard the craft, said signals transmitted by the satellites of the positioning system each resulting from the modulation of a carrier by a spreading code, this craft tracking system comprising:

   onboard the craft,

      - a transponder retransmitting the signals from the satellites of the positioning system after an infradyne frequency transposition by means of a transposition carrier of higher frequency $KF_Q$ than that $F_0$ of the satellite signals, by associating a transposition driver $F_Q$ representative of the phase and frequency of the carrier used for the transposition $KF_Q$, and, at the monitoring station,
      - a receiver responsive to the signals retransmitted by the transponder, with:

         - a signal processing part incorporating a demodulation stage with a spreading code recovery loop (20, 20') nested within a carrier recovery loop (30, 30'), each slaved to its own error signal, the error signal of the code recovery loop (20, 20') being representative of the delay affecting, on reception, the spreading code of the signal undergoing demodulation and the error signal of the carrier recovery loop (30, 30') being representative of the frequency gap affecting, on reception, the carrier of the signal undergoing demodulation,
         - a part (40, 41) for determining the frequency gap $K\Delta F_2$, with respect to its preset value, of the transposition carrier used by the transponder, operating on the basis of the transposition driver received from the transponder,
         - means for correcting the error signal of the carrier recovery loop, of the bias caused by the frequency gap $\Delta F_2$ determined by the part for determining frequency gap, and
         - a part (50) for signal utilization, extracting information regarding the position and the speed of the craft from the error signals of the code recovery loop (20, 20') and of the carrier recovery loop (30, 30') of the processing part, the error signal of the carrier recovery loop being corrected beforehand of the frequency gap $K\Delta F_2$ delivered by the frequency gap determining part (40, 41),

   said craft tracking system being **characterized in that** it comprises:

      at the level of the monitoring station,

         - means (50) for interpreting the error signal of the carrier recovery loop, after correction of the bias caused by the frequency gap $K\Delta F_2$ determined by the

      frequency gap determining part (40, 41) as a measurement representative of the Doppler effect caused, on the initial frequency $F_0$ of the signal relayed by the transponder, by an approach speed corresponding to the sum of the craft/satellite $V_{OS}$ and craft/receiver $V_{OR}$ relative retreat speeds.

**2.** Craft tracking system according to Claim 1, **characterized in that** the receiver part (40, 41) relating to the determination of the frequency gap affecting the transposition carrier of the transponder comprises:

- a loop for recovering the transposition driver (40),
- a circuit (40) for measuring the frequency gap of the transposition driver with respect to a preset value, and
- a first scaling circuit (41) operating on the error signal delivered by the gap-measuring circuit (40) so as to take account of the ratio K existing between the transposition driver and the transposition carrier.

**3.** System for tracking a craft according to Claim 1, **characterized in that** the receiver comprises a first subtractor (42) which is interposed on a link traversed by the error signal of the carrier recovery loop (30) so as to reach the signal utilization part (50) of the receiver and which deducts, from the error signal of the carrier recovery loop (30), the signal delivered by the part (40, 41) for determining the frequency gap of the transposition carrier.

**4.** System for tracking a craft according to Claim 3, **characterized in that** the receiver furthermore comprises an adder (44) which is interposed on a link traversed by the error signal of the code recovery loop (20) so as to reach the signal utilization part (50) of the receiver and which adds to the error signal of the code recovery loop, the error signal of the carrier recovery loop (30) once it has been corrected of the frequency error made by the transponder and scaled in the ratio of the code frequency $F_c$ to the carrier frequency $F_0$.

**5.** System for tracking a craft according to Claim 1, with a receiver comprising a carrier recovery loop (30') provided with a local oscillator (32) driven by an error signal, by way of a phase control input, **characterized in that** the receiver comprises an adder (42') which is interposed in the carrier recovery loop (30'), ahead of the phase control input of the local oscillator (32) and which adds to the error signal of the carrier recovery loop (30'), the signal delivered by the part (40, 41) for determining the frequency gap of the transposition carrier.

**6.** System for tracking a craft according to Claim 1, with a receiver comprising a code recovery loop (20') provided with a local code generator (22) whose clock is driven by an error signal, by way of a phase control input, **characterized in that** the receiver furthermore comprises a subtractor (44') which is interposed in the code recovery loop (20') ahead of the phase control input of the clock of the local code generator (22) of the receiver and which deducts from the error signal of the code recovery loop (20'), the error signal of the carrier recovery loop (30) once it has been corrected of the frequency error made by the transponder and scaled in the ratio of the code frequency $F_c$ to the carrier frequency $F_0$, as delivered by the part (40, 41) for determining the frequency gap of the transposition carrier.

**Patentansprüche**

**1.** System zur Verfolgung einer Mobileinheit ausgehend von einer Überwachungsstation mittels Signalen, die von Satelliten eines Positionsbestimmungssystems gesendet und von einem an Bord der Mobileinheit befindlichen Transponder frequenzumgesetzt und übertragen werden, wobei die von den Satelliten des Positionsbestimmungssystems gesendeten Signale je aus der Modulation einer Trägerwelle durch einen Spreizungscode resultieren, wobei dieses System zur Verfolgung einer Mobileinheit aufweist:

an Bord der Mobileinheit,

- einen Transponder, der die Signale der Satelliten des Positionsbestimmungssystem nach einer heruntergemischten Frequenzumsetzung mittels einer Frequenzumsetzungs-Trägerwelle $KF_Q$ höher als diejenige $F_0$ der Satellitensignale wieder aussendet, indem er ein Umsetzungs-Pilotsignal $F_Q$ zuordnet, das für die Phase und die Frequenz der Trägerwelle repräsentativ ist, die für die Umsetzung $KF_Q$ verwendet wird, und

in der Überwachungsstation,

- einen für die vom Transponder wieder ausgesendeten Signale empfindlichen Empfänger, mit:

- einem Signalverarbeitungsbereich, in den eine Demodulationsstufe mit einer Spreizungscode-Rückgewinnungsschleife (20, 20') eingefügt ist, die in eine Trägerwellen-Rückgewinnungsschleife (30, 30') verschachtelt ist, die je auf ihr eigenes Fehlersignal geregelt sind, wobei das Fehlersignal der Code-Rückgewinnungsschleife (20, 20') für die Verzögerung repräsentativ ist, die sich auf der Empfangsseite auf den Spreizungscode des in Demodulation befindlichen Signals auswirkt, und das Fehlersignal der Trägerwellen-Rückgewinnungsschleife (30, 30') für die Frequenzabweichung repräsentativ ist, die sich auf der Empfangsseite auf die Trägerwelle des in Demodulation befindlichen Signals auswirkt,

- eine Bereich (40, 41) der Bestimmung der Frequenzabweichung $K\Delta F_2$ der vom Transponder verwendeten Umsetzungs-Trägerwelle bezüglich ihres Sollwerts, der ausgehend von dem vom Transponder empfangenen Umsetzungs-Pilotsignal arbeitet,

- Mittel, um im Fehlersignal der Trägerwellen-Rückgewinnungsschleife die Verzerrung zu korrigieren, die von der Frequenzabweichung $\Delta F_2$ hervorgerufen wird, die vom Bereich der Bestimmung der Frequenzabweichung bestimmt wird, und

- einen Bereich (50) der Signalauswertung, der Informationen über die Position und die Geschwindigkeit der Mobileinheit aus den Fehlersignalen der Code-Rückgewinnungsschleife (20, 20') und der Trägerwellen-Rückgewinnungsschleife (30, 30') des Verarbeitungsbereichs extrahiert, wobei im Fehlersignal der Trägerwelle-Rückgewinnungsschleife vorher die der Frequenzabweichung $K\Delta F_2$ korrigiert wird, die vom Bereich der Frequenzabweichung (40, 41) geliefert wird,

wobei das System zur Verfolgung einer Mobileinheit **dadurch gekennzeichnet ist, dass** es aufweist:

auf der Ebene der Überwachungsstation,

- Mittel (50) zur Interpretation des Fehlersignals der Trägerwellen-Rückgewinnungsschleife, nach Korrektur der Verzerrung, die von der Frequenzabweichung $K\Delta F_2$ hervorgerufen wird, welche vom Bereich der Bestimmung der Frequenzabweichung (40, 41) als repräsentativer Messwert des Doppler-Effekts bestimmt wird, der auf der Anfangsfrequenz $F_0$ des vom Transponder übertragenen Signals durch eine Annäherungsgeschwindigkeit hervorgerufen wird, die der Summe der relativen Entfernungsgeschwindigkeiten Mobileinheit-Satellit $V_{OS}$ bzw. Mobileinheit-Empfänger $V_{OR}$ entspricht.

2. System zur Verfolgung einer Mobileinheit nach Anspruch 1, **dadurch gekennzeichnet, dass** der Bereich (40, 41) des Empfängers bezüglich der Bestimmung der Frequenzabweichung, die sich auf die Umsetzungs-Trägerwelle des Transponders auswirkt, aufweist:

- eine Rückgewinnungsschleife (40) des Umsetzungs-Pilotsignals,
- eine Schaltung (40) zur Messung der Frequenzabweichung des Umsetzungs-Pilotsignals bezüglich eines Sollwerts, und
- eine erste Aufbereitungsschaltung (41), die an dem Fehlersignal arbeitet, das von der Schaltung (40) zur Abweichungsmessung geliefert wird, um das Verhältnis K zu berücksichtigen, das zwischen dem Umsetzungs-Pilotsignal und der Umsetzungs-Trägerwelle existiert.

3. System zur Verfolgung einer Mobileinheit nach Anspruch 1, **dadurch gekennzeichnet, dass** der Empfänger einen ersten Subtrahierer (42) aufweist, der auf einer Verbindung eingeschoben ist, über die das Fehlersignal der Trägerwellen-Rückgewinnungsschleife (30) geht, um zum Signalauswertungsbereich (50) des Empfängers zu kommen, und der vom Fehlersignal der Trägerwellen-Rückgewinnungsschleife (30) das Signal abzieht, das von dem Bereich (40, 41) der Bestimmung der Frequenzabweichung der Umsetzungs-Trägerwelle geliefert wird.

4. System zur Verfolgung einer Mobileinheit nach Anspruch 3, **dadurch gekennzeichnet, dass** der Empfänger außerdem einen Addierer (44) aufweist, der auf einer Verbindung eingeschoben ist, über die das Fehlersignal der Code-Rückgewinnungsschleife (20) geht, um zum Signalauswertungsbereich (50) des Empfängers zu kommen, und der zum Fehlersignal der Code-Rückgewinnungsschleife das Fehlersignal der Trägerwellen-Rückgewinnungsschleife (30) addiert, wenn in ihm der vom Transponder erzeugte Frequenzfehler korrigiert wurde und es im Verhältnis der Codefrequenz $F_c$ zur Trägerfrequenz $F_0$ aufbereitet wurde.

5. System zur Verfolgung einer Mobileinheit nach Anspruch 1 mit einem Empfänger, der eine Trägerwellen-Rückgewinnungsschleife (30') aufweist, die mit einem lokalen Oszillator (32) versehen ist, welcher von einem Fehlersignal über einen Phasensteuerungseingang gesteuert wird, **dadurch gekennzeichnet, dass** der Empfänger einen Addierer (42') aufweist, der in der Trägerwellen-Rückgewinnungsschleife (30') vor dem Phasensteuerungseingang des lokalen Oszillators (32) eingefügt ist und der zum Fehlersignal der Trägerwellen-Rückgewinnungsschleife (30') das Signal hinzufügt, das von dem Bereich (40, 41) der Bestimmung der Frequenzabweichung der Umsetzungs-Trägerwelle geliefert wird.

**6.** System zur Verfolgung einer Mobileinheit nach Anspruch 1 mit einem Empfänger, der eine Code-Rückgewinnungsschleife (20') aufweist, die mit einem lokalen Codegenerator (22) versehen ist, dessen Taktgeber von einem Fehlersignal über einen Phasensteuerungseingang gesteuert wird, **dadurch gekennzeichnet, dass** der Empfänger außerdem einen Subtrahierer (44') aufweist, der in der Code-Rückgewinnungsschleife (20') vor dem Phasensteuerungseingang des Taktgebers des lokalen Codegenerators (22) des Empfängers eingefügt ist und der vom Fehlersignal der Code-Rückgewinnungsschleife (20') das Fehlersignal der Trägerwellen-Rückgewinnungsschleife (30) abzieht, wenn in ihm der vom Transponder erzeugte Frequenzfehler korrigiert wurde und es im Verhältnis der Codefrequenz $F_c$ zur Trägerfrequenz $F_0$ aufbereitet wurde, das von dem Bereich (40, 41) der Bestimmung der Frequenzabweichung der Umsetzungs-Trägerwelle geliefert wird.

FIG.1

## FIG.2

## FIG.5

FIG.3

EP 1 327 159 B1

FIG.4

EP 1 327 159 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2759783 A1
- US 5729235 A